# EUROPÄISCHE PATENTSCHRIFT

(11) **EP 3 759 421 B1**
(45) Veröffentlichungstag und Bekanntmachung des Hinweises auf die Patenterteilung: **15.03.2023**
(21) Anmeldenummer: 19708983.2
(22) Anmeldetag: 26.02.2019
(51) Int. Cl.: G01B 9/02, G01B 9/02015, G01B 9/02055

(54) **STRAHLENFÜHRUNG IM INTERFEROMETER**
BEAM GUIDANCE IN THE INTERFEROMETER
GUIDAGE DE FAISCEAUX DANS L'INTERFÉROMÈTRE

(30) Priorität: 27.02.2018 EP 18158804
(43) Veröffentlichungstag der Anmeldung: 06.01.2021
(73) Patentinhaber: METROHM AG, 9100 Herisau (CH)
(72) Erfinder: GISLER, Thomas, 9113 Degersheim (CH)
(74) Vertreter: Hepp Wenger Ryffel AG
(86) Internationale Anmeldenummer: PCT/EP2019/054762
(87) Internationale Veröffentlichungsnummer: WO 2019/166446

(56) Entgegenhaltungen:
- DE-A1- 3 404 963
- US-A1- 2011 043 819
- R. M. A. AZZAM ET AL: "Achromatic angle-insensitive infrared quarter-wave retarder based on total internal reflection at the Si-SiO_2 interface", JOURNAL OF THE OPTICAL SOCIETY OF AMERICA A, Bd. 21, Nr. 10, 1. Oktober 2004 (2004-10-01), Seite 2019, XP055488142, US ISSN: 1084-7529, DOI: 10.1364/JOSAA.21.002019

## Beschreibung

Die Erfindung betrifft ein Referenzinterferometer zur Bestimmung einer optischen Weglängenänderung, insbesondere einer relativen optischen Weglängenänderung in Interferometerarmen, umfassend einen Strahlteiler und eine Laserlichtquelle.

Weiter betrifft die Erfindung eine Verwendung eines solchen Referenzinterferometers.

Des Weiteren betrifft die Erfindung ein Interferometer mit einem solchen Referenzinterferometer sowie ein Spektrometer, insbesondere ein Nah-Infrarot-Spektrometer, mit einem derartigen Interferometer.

Ferner betrifft die Erfindung ein Verfahren zur Bestimmung einer optischen Weglängenänderung, insbesondere einer relativen optischen Weglängenänderung in Interferometerarmen, wobei von einer Laserlichtquelle ein Lichtstrahl, insbesondere ein Referenzstrahl auf einen Strahlteiler gestrahlt wird.

Zweistrahlinterferometer, wie sie beispielsweise in Fourier-Transformationsspektrometern eingesetzt werden, benötigen in der Regel ein Referenzinterferometer zur Messung eines Weglängenunterschieds von zwei Lichtstrahlen in den Interferometerarmen.

In US2011/0043819 ist ein Laser-Messinterferometer gezeigt, welches auf Laserstrahl-Interferenz beruht. Ein Mess-Interferomenter generiert Messresultate, welche die Verschiebung eines beweglichen Elements wiedergeben; und ein Korrekturinterferometer generiert Messresultate, welche die Änderung des Brechungsindex der Luft in einem konstanten Referenz-Intervall angeben. Eine Rechnereinheit berechnet gestützt darauf den Zielwert für die Verschiebung des beweglichen Elements, um die Änderung im Brechungsindex zu kompensieren.

Zur Messung der relativen optischen Weglängenänderung wird oftmals eine sogenannte Quadraturdetektion verwendet, um neben einem Betrag der optischen Weglängenänderung in den Interferometerarmen auch deren Vorzeichen erfassen zu können. Quadraturdetektion wird in vielen kommerziell erhältlichen Zweistrahlinterferometern verwendet. Hierfür werden zwei Referenzinterferometer realisiert, wobei sich ein optischer Weglängenunterschied in beiden Interferometerarmen um etwa λ/4 ergibt. Die Messung von beiden Interferenzsignalen erlaubt neben einer Bestimmung des Betrages der optischen Weglängenänderung zusätzlich auch die Bestimmung des Vorzeichens derselben. Eine Quadraturdetektion kann beispielsweise durch zwei räumlich getrennte Interferometer realisiert werden.

Eine andere Realisierungsmöglichkeit ist ein Einbringen eines λ/4-Plättchens in einen Referenzlaserstrahl in einem Interferometerarm, wodurch sich ein passender optischer Weglängenunterschied für s- und p-polarisiertes bzw. senkrecht und parallel polarisiertes Licht ergibt. Eine Detektion der Laserstrahlen erfolgt dann über einen Polarisationsstrahlteiler und zwei Detektoren.

Da es sich schwierig gestaltet, eine einfache Quadraturdetektion insbesondere in einem monolithischen Interferometeraufbau zu realisieren, insbesondere ein retardierendes Element wie ein λ/4-Plättchen in einem Arm des Interferometers zu integrieren, wurde bereits ein Interferometeraufbau vorgeschlagen, der monolithisch ist und mit dem eine optische Weglängenänderung dennoch einfach und effizient bestimmbar ist. Ein solcher Aufbau wird in der Anmeldung EP3495766 offenbart.

Die Lehre der EP3495766 wird hiermit durch Bezugnahme in die vorliegende Beschreibung eingeschlossen. EP3495766 zeichnet sich dadurch aus, dass die Phasenverschiebung zwischen den s- und p-polarisierten Anteilen des Referenzstrahls nicht durch ein λ/4-Plättchen realisiert wird, sondern durch Umlenken des Strahls auf eine mit HfO₂ beschichtete Ober- resp. Unterseite des Referenzinterferometers. An einer Grenzfläche zwischen der Hafniumdioxid-Schicht und der Luft findet Totalreflexion statt, welche mit einer bestimmten Phasenverschiebung zwischen senkrecht und parallel polarisiertem (s- und p-polarisiertem) Licht einhergeht.

Auch diese Ausführungsform weist jedoch weiterhin Nachteile auf. Der Referenzstrahl bzw. beide Teile des geteilten Referenzstrahls sollen via eine Ober- bzw. Unterseite des Interferometers auf die Spiegelfläche der Interferometer-Arme gelenkt werden. Deshalb können die zugehörigen Lichtquellen nicht in der Ebene, welche durch die optischen Achsen des einfallenden bzw. aus dem Interferometer austretenden Nutzstrahls aufgespannt wird, ausgerichtet werden. Da der Lichtstrahl auf die Oberresp. Unterseite des Strahlteilers gelenkt werden soll, wird die Lichtquelle schräg ausgerichtet, so dass die Ausbreitungsrichtung des austretenden Lichtstrahls nicht direkt auf ein Spiegelelement zuläuft, sondern hinsichtlich des Nutzstrahls verkippt ist. Dadurch ergibt sich ein höherer Aufwand zur Ausrichtung des Referenzstrahls und erhöhter Platzbedarf beim Aufbau der Apparatur.

Die US2011/0043819 A1 zeigt ein Lasermessinterferometer, das Laserstrahlinterferenz verwendet, umfassend ein Messinterferometer, das eine Messausgabe erzeugt, die einer Verschiebung eines sich bewegenden Elements entspricht; und ein Korrekturinterferometer, das eine Messausgabe erzeugt, die einer Änderung des Brechungsindex von Luft in einem konstanten Referenzintervall entspricht. Eine arithmetische Verarbeitungsvorrichtung berechnet einen Messzielverschiebungsbetrag, um den der Einfluss der Änderung des Brechungsindex von Luft korrigiert wird. Ein Korrekturlaserstrahl vom Korrekturinterferometer passiert das Messinterferometer und bewegt sich somit auf demselben optischen Weg wie ein optischer Weg eines Korrekturlaserstrahls vom Messinterferometer, um Interferenzlicht zu werden, das der Änderung des Brechungsindex von Luft entspricht, durch die ein Messlaserstrahl passiert und tritt dann in die arithmetische Verarbeitungsvorrichtung ein. Dieses Dokument zeigt nicht einen kompakten, monolithischen Interferometeraufbau. Die Vorrichtung setzt konventionell ein λ/4-Plättchen in einem Interferometerarm ein, um den optischen Weglängenunterschied für s- und p-polarisiertes bzw. senkrecht und parallel polarisiertes Licht zu erzielen, mit den damit verbundenen Nachteilen.

Es ist daher das Ziel der vorliegenden Erfindung, ein Referenzinterferometer vorzuschlagen, welches die oben genannten Nachteile überwindet. Insbesondere soll ein noch kompakteres und robusteres Referenzinterferometer erhältlich gemacht werden.

Weiter ist es ein Ziel, eine Verwendung eines solchen Referenzinterferometers anzugeben.

Ein weiteres Ziel ist es, ein Interferometer mit einem solchen Referenzinterferometer sowie ein Spektrometer mit einem derartigen Interferometer anzugeben.

Ferner ist es ein Ziel, ein Verfahren der eingangs genannten Art anzugeben, mit welchem eine optische Weglängenänderung einfach und effizient bestimmt werden kann.

Die Aufgabe wird erfindungsgemäss durch die Merkmale des Anspruchs 1 gelöst.

Erfindungsgemäß ist das dem Strahlteiler im Strahlengang vorgelagerte Prisma vom Referenzinterferometer umfasst, bildet also einen integralen Bestandteil desselben. Alternativ/zusätzlich ist das dem Strahlteiler im Strahlengang nachgelagerte Prisma vom Referenzinterferometer umfasst, bildet also einen integralen Bestandteil desselben.

Ein mit der Erfindung erzielter Vorteil ist insbesondere darin zu sehen, dass durch die interne Totalreflexion an einer Grenzfläche eine Phasenverschiebung zwischen x- und y-polarisiertem bzw. senkrecht (s-) und parallel (p-) polarisiertem Licht entsteht, wobei die Phasenverschiebung von einer Brechzahl des Strahlteilers und einem Auftreffwinkel des Lichtstrahles abhängt. Dabei muss der Auftreffwinkel nicht zwingend durch eine Positionierung der Lichtquelle und/oder des Detektors schräg zur xz-Ebene bewirkt werden, sondern er kann durch den gezielten Einsatz von Prismen platzsparend und präzise eingestellt werden.

Ein Referenzinterferometer umfassend das dem Strahlteiler im Strahlengang vorgelagerte Prisma und/oder das dem Strahlteiler im Strahlengang nachgelagerte Prisma erweist sich als kompakt. Wenn das Referenzinterferometer in ein Interferometer integriert ist, in welchem ein Nutzstrahl über die gleichen Spiegelelemente - jedoch nicht über die Seitenflächen des Strahlteilers - geführt wird, ergeben sich weitere Vorteile hinsichtlich Kosteneffizienz und Präzision. Weitere Ausführungen werden nachstehend im Detail beschrieben.

Der Einsatz von Prismen hat den Vorteil, dass der Einfallswinkel des Lichtstrahls der Referenzlichtquelle auf den Strahlteiler frei gewählt und bei Bedarf auch angepasst werden kann, ohne dass dafür die Ausrichtung der Lichtquelle und/oder des wenigstens einen Detektors und/oder Polarisationsstrahlteilers geändert werden müsste.

Für die detaillierte Beschreibung der Erfindung gelten die nachfolgenden Definitionen:
Die zentrale z-Achse ist die Flächennormale zur Spiegelfläche eines ersten Spiegelelements, insbesondere durch deren Mitte, in einem ersten Interferometerarm. Bevorzugt ist der erste Interferometerarm Teil eines Interferometers mit Michelson-Aufbau; die zentrale z-Achse entspricht dann der Flächennormalen zur Spiegelfläche eines ersten Spiegelelements an der Stirnseite des Interferometerarms, in welchem der die Strahlteilerschicht traversierende Strahl sich ausbreitet.

Die zentrale x-Achse ist die Flächennormale zur Spiegelfläche eines zweiten Spiegelelements, insbesondere durch deren Mitte, in einem zweiten Interferometerarm. Bevorzugt ist der zweite Interferometerarm Teil eines Referenzinterferometers mit Michelson-Aufbau; die zentrale x-Achse entspricht dann der Flächennormalen zur Spiegelfläche eines zweiten Spiegelelements an der Stirnseite des Interferometerarms, in welchem der an der Strahlteilerschicht reflektierte Strahl sich ausbreitet.

Die y-Achse steht senkrecht zur Ebene, welche durch die zentrale z-Achse und die zentrale x-Achse aufgespannt wird.

Es wird als erste Seitenfläche des Strahlteilers verstanden: Eine ebene Fläche, die wenigstens abschnittsweise parallel zur zentralen z-Achse verläuft und den ersten Interferometerarm so seitlich begrenzt, oder eine ebene Fläche, die wenigstens abschnittsweise parallel zur zentralen x-Achse verläuft und den zweiten Interferometerarm so seitlich begrenzt, insbesondere im Interferometer mit Michelson-Aufbau.

Die erste Seitenfläche im ersten Interferometerarm und die erste Seitenfläche im zweiten Interferometerarm fallen bevorzugt zusammen, indem sie auf einer gemeinsamen Ebene liegen, welche parallel ist zur Ebene, die durch die zentrale z-Achse und die zentrale x-Achse aufgespannt wird. Solche zusammenfallende erste Seitenflächen des ersten und zweiten Interferometerarms werden als Oberseite bezeichnet.

Bevorzugt fallen die zweite Seitenfläche im ersten Interferometerarm und die zweite Seitenfläche im zweiten Interferometerarm zusammen, indem sie auf einer gemeinsamen Ebene liegen, welche parallel ist zur Ebene, die durch die zentrale z-Achse und die zentrale x-Achse aufgespannt wird, und welche Ebene der Oberseite gegenüberliegt; die gemeinsame Ebene der zweiten Seitenflächen des ersten und zweiten Interferometerarms, gegenüberliegend der Oberseite wird als Unterseite bezeichnet.

Wenigstens eines der Spiegelelemente ist beweglich verstellbar. Das erste Spiegelelement kann entlang der zentralen z-Achse, das zweite Spiegelelement kann entlang der zentralen x-Achse bewegbar sein. Die Ausrichtung der Spiegelflächen erfährt aber keine Kippung. Auch werden die Spiegelelemente nicht verschoben in einer anderen Richtung als der z-Richtung für das erste Spiegelelement oder in einer anderen als der x-Richtung für das zweite Spiegelelement. Die zentrale z-Achse und die zentrale x-Achse schneiden sich im Referenzinterferometer mit Michelson-Aufbau stets an der Strahlteilerschicht.

Bevorzugt ist das wenigstens eine Prisma so ausgebildet, dass ein im Wesentlichen auf der zentralen z-Achse oder parallel zur zentralen z-Achse auf den Strahlteiler zulaufender Lichtstrahl gebrochen und schräg auf eine erste Seitenfläche des Strahlteilers, insbesondere eine Oberseite, geführt werden kann. Besonders bevorzugt ist also die Ausrichtung der optischen Achse der Referenzlichtquelle auf der zentralen z-Achse oder parallel zur zentralen z-Achse. Insbesondere wenn ein Michelson-Interferometeraufbau gewählt wird, steht die optische Achse der Referenzlichtquelle senkrecht auf der Ebene eines ersten Spiegelelements an der Stirnseite eines ersten Interferometerarms. Dadurch ist ein besonders einfaches und robustes Referenzinterferometer erhältlich, welches darüber hinaus mit relativ wenig Aufwand produziert werden kann. Die Strahlausbreitung im Referenzinterferometer unmittelbar nach der Lichtquelle erfolgt in dieser bevorzugten Ausführung auf der zentralen z-Achse. Dies macht die Herstellung des Interferometers einfach, präzis und günstig.

Durch ein dem Strahlteiler vorgelagertes Prisma, insbesondere durch Verwendung eines Strahlteilers mit vorgelagertem Prisma, wird der Strahl sodann gebrochen und schräg von der z-Achse weg gelenkt, um in dem gewünschten Einfallswinkel auf die beschichtete oder unbeschichtete Seitenfläche des Strahlteilers zu treffen. Dadurch kann eine einfache und kompakte Bauweise realisiert werden und der Lichtstrahl trifft in einem für die totale interne Reflexion geeigneten Winkel auf die Seitenfläche. Bei Bedarf kann der Brechungswinkel durch Austauschen des Prismas einfach und rasch geändert werden.

Das erste Prisma kann an den Strahlteiler geklebt, gekittet oder auf andere Weise vor dem Strahlteiler angeordnet oder befestigt werden. Das Prisma kann einstückig mit dem Strahlteiler ausgebildet sein. Der Effekt der Lichtbrechung kann auch dadurch erzielt werden, dass die Fläche, durch welche der Strahl in den Strahlteiler eintritt, so ausgebildet ist, dass sie zur optischen Achse des Referenzlichtstrahls in einem anderen als einem 90° Winkel steht. In diesem Fall ist unter dem Begriff Prisma der Teilbereich des Strahlteilers mit der abgeschrägten Fläche zu verstehen. Besonders bevorzugt wird ein gerades dreiseitiges Prisma oder ein gerades Prisma mit trapezoidaler Grundfläche verwendet. Das gerade dreiseitige Prisma kann so ausgerichtet werden, dass der Lichtstrahl auf eine erste Seitenfläche des Strahlteilers, insbesondere eine Oberseite, lenkbar ist. Bevorzugt werden für das Prisma Materialien gewählt, die hinreichend transparent für die Wellenlänge des Referenzlichtstrahls sind, beispielsweise kann das Prisma aus synthetischem Quarzglas gefertigt sein.

Zusätzlich oder alternativ zum Prisma, welches im Strahlengang dem Strahlteiler vorgelagert ist, kann ein Prisma im Strahlengang dem Strahlteiler nachgelagert sein. Bevorzugt wird ein Strahlteiler umfassend das nachgelagerte Prisma verwendet. Bevorzugt ist ein nachgelagertes Prisma so ausgebildet, dass ein schräg zur zentralen x-Achse vom Strahlteiler weglaufender Lichtstrahl gebrochen und im Wesentlichen auf einen Verlauf auf der zentralen x-Achse oder parallel zur zentralen x-Achse geführt werden kann. Insbesondere wenn ein Michelson-Interferometeraufbau gewählt wird, kann der Detektor so ausgerichtet werden, dass die Normale zur Detektorfläche senkrecht auf der Ebene eines zweiten Spiegelelements an der Stirnseite eines zweiten Interferometerarms steht.

Denn der Referenzstrahl, welcher an einer ersten Seitenfläche des Strahlteilers, bevorzugt an der Oberseite, totalreflektiert wird und via ein erstes oder zweites Spiegelelement über eine zweite Seitenfläche des Strahlteilers, bevorzugt über die Unterseite, erneut totalreflektiert wird, verläuft beim Austritt aus dem Strahlteiler nicht entlang der zentralen x-Achse oder parallel zur zentralen x-Achse. Um die Fläche des wenigstens einen Detektors für den Referenzstrahl dennoch parallel zur Seitenfläche des Strahlteilers positionieren zu können, kann ein zweites Prisma eingesetzt werden. Durch das zweite Prisma kann der schräg zur zentralen x-Achse verlaufende Lichtstrahl so gebrochen werden, dass er nach Austritt aus dem Prisma auf der zentralen x-Achse oder parallel zur zentralen x-Achse verläuft. Dadurch kann eine einfache und kompakte Bauweise realisiert werden und der Lichtstrahl kann dennoch lotrecht auf eine parallel zur zentralen z-Achse resp. parallel zur Seitenfläche des Strahlteilers ausgerichtete Detektorfläche treffen. Bei Bedarf kann der Brechungswinkel durch Austauschen des Prismas einfach und rasch geändert werden.

Analog zum ersten Prisma kann auch das zweite Prisma an den Strahlteiler geklebt, gekittet oder auf andere Weise im Strahlengang nach dem Strahlteiler angeordnet oder befestigt werden. Das Prisma kann einstückig mit dem Strahlteiler ausgebildet sein. Der Effekt der Lichtbrechung kann auch dadurch erzielt werden, dass die Fläche, durch welche der Strahl aus dem Strahlteiler austritt, so ausgebildet ist, dass sie zur optischen Achse des Lichtsstrahls in einem anderen als einem 90° Winkel steht. In diesem Fall ist unter dem Begriff Prisma der Teilbereich des Strahlteilers mit der abgeschrägten Fläche zu verstehen. Es kann ein einzelnes oder mehrere Prismen eingesetzt werden. Besonders bevorzugt ist ein gerades dreiseitiges Prisma oder ein gerades Prisma mit trapezoidaler Grundfläche. Das gerade dreiseitige Prisma kann so ausgerichtet werden, dass der von einer zweiten Seitenfläche des Strahlteilers her, insbesondere von einer Unterseite (62) her, eintretende Lichtstrahl gebrochen wird. Bevorzugte Materialien sind hinreichend transparent für die Wellenlänge der Referenzlichtquelle. Das Prisma kann zum Beispiel aus synthetischem Quarzglas gefertigt sein.

Bevorzugterweise ist das wenigstens eine Prisma mit einer Antireflexbeschichtung versehen, welche angepasst ist auf die Wellenlänge der Referenzlichtquelle.

Der Lichtstrahl ist insbesondere als Laserlichtstrahl ausgebildet, welcher von der Laserlichtquelle emittiert wird.

Die erste Seitenfläche und/oder die zweite Seitenfläche, insbesondere die Oberseite und/oder die Unterseite, des Strahlteilers ist/sind, insbesondere teilweise, mit einer Beschichtung beschichtet. Es könnten auch Ober- oder Unterseiten je oder gemeinsam vollständig mit demselben Material beschichtet sein. Eine Beschichtung, die günstig ist für eine totale interne Reflexion, welche mit einer bestimmten Phasenverschiebung zwischen senkrecht und parallel polarisiertem (s- und p-polarisiertem) Licht einhergeht, wird im folgenden Retarderschicht genannt. Eine Retarderschicht kann bevorzugt an einer Seitenfläche des Strahlteilers, bevorzugt an einer Ober- oder Unterseite des Strahlteilers angebracht werden. Die Retarderfunktion auf einem Interferometerarm wird nur dann erzielt, wenn die Beschichtungen sich unterscheiden in Brechzahl und/oder Dicke. Durch gezielte Wahl von Brechzahl und Dicke der Beschichtung kann bei gegebenem Auftreffwinkel des Lichtstrahls der Laserlichtquelle eine gewünschte Phasenverschiebung zwischen s- und p-polarisiertem Licht erzielt werden.

Es ist bevorzugt, dass die Beschichtung/Beschichtungen der Seiten im ersten Interferometerarm im Vergleich zu der Beschichtung/den Beschichtungen im zweiten Interferometerarm unterschiedlich ausgebildet ist/sind. Insbesondere können die erste und zweite Seitenfläche im ersten Interferometerarm mit einer Retarderschicht, wie vorstehend beschrieben, beschichtet sein, während die erste und zweite Seitefläche im zweiten Interferometerarm unbeschichtet sind, oder mit einer Beschichtung beschichtet sind, die für totale interne Reflexion günstig ist, ohne als Retarderschicht ausgebildet zu sein. Diese Asymmetrie der Beschichtung der Seitenflächen in den beiden Interferometerarmen kann auch erzielt werden, wenn die erste Seitenfläche im ersten Interferometerarm und die erste Seitenfläche im zweiten Interferometerarm zusammenfallen, indem sie z.B. auf einer gemeinsamen Oberseite eines Strahlteilerprismas liegen, und die zweite Seitenfläche im ersten Interferometerarm und die zweite Seitenfläche im zweiten Interferometerarm zusammenfallen, indem sie z.B. auf einer gemeinsamen Unterseite eines Strahlteilerprismas liegen. In diesem Fall können zum Beispiel die Oberseite und/oder die Unterseite des Strahlteilerprismas nur teilweise, etwa nur an Abschnitten der Seitenflächen, die dem ersten Interferometerarm zugerechnet werden, mit einer Retarderschicht beschichtet sein.

Insbesondere ist es vorteilhaft, wenn die Brechzahl und die Dicke der Beschichtung derart gewählt sind, dass bei einem mittels totaler interner Reflexion reflektierten Lichtstrahl der Laserlichtquelle eine Phasenverschiebung um λ/4 ± π/10, vorzugsweise um π/2 ± π/20, zwischen s- und p-polarisierten totalreflektierten Strahlen erzielbar ist. Somit ist ein im Stand der Technik verwendetes λ/4-Plättchen nicht mehr notwendig. Der Strahlteiler ist mit einer einfachen Schicht geeigneter Brechzahl beschichtet, wodurch eine Grösse einer Phasenverschiebung kontrollierbar ist. Beispielsweise ist der Strahlteiler mit einer Hafniumdioxidschicht beschichtet, wobei die Hafniumdioxidschicht eine Brechzahl von etwa 1,82 aufweist. Eine Phasenverschiebung von λ/4 ist beispielsweise mit einer Schichtdicke von etwa 60 nm und/oder etwa 120 nm bei einer Laserwellenlänge von 638 nm erreichbar. Durch eine Anpassung der Schichtdicke und/oder eines Schichtmaterials kann nahezu jede erwünschte Phasenverschiebung für beliebige Substratmaterialien, Einfallswinkel und Laserwellenlänge erreicht werden, was zahlreiche Anwendungsmöglichkeiten eines erfindungsgemässen Referenzinterferometers eröffnet.

Weitere mögliche Beschichtungsmaterialien sind Indium-Zinn-Oxid, Titandioxid, Nb₂O₃, Ta₂O₃, ZrO₂, Sc₃O₃, Y₂O₃, sowie Mischoxide der genannten Oxide untereinander und/oder mit SiO₂.

Es ist vorteilhaft, wenn der Strahlteiler als Parallelepiped, insbesondere als gerades Vierecksprisma, vorzugsweise als Würfel oder Quader ausgebildet ist. Dadurch ist eine besonders einfache Realisierung des Referenzinterferometers gegeben bzw. möglich. Ein Strahlteilerquader kann beispielsweise 20 mm bis 30 mm mal 20 mm bis 30 mm mal 5 mm bis 10 mm, bevorzugt 22 mm bis 28 mm mal 22 mm bis 28 mm mal 6 mm bis 8 mm, insbesondere etwa 25 mm mal 25 mm mal 7 mm, gross sein.

Erfindungsgemäß ist zumindest ein Detektor vorgesehen. Insbesondere kann es günstig sein, wenn eine Detektion des Lichtstrahles der Laserlichtquelle als Referenzstrahl mit einem Polarisationsstrahlteiler und zwei Detektoren erfolgt. Bevorzugt sind zwei photoelektrische Detektoren zur Detektion von zwei durch einen Polarisationsstrahlteiler geteilte Teilstrahlen vorgesehen. Der zumindest eine Detektor kann insbesondere als Strahlungsdetektor, vorzugsweise als eine Fotozelle, Fotodiode oder ein Fotomultiplier, ausgebildet sein.

Die Laserlichtquelle kann ein Diodenlaser, insbesondere ein Distributed Feedback Laser (DFB-Laser), ein Distributed Bragg Reflector Laser (DBR-Laser) oder ein Vertical Cavity Surface-Emitting Laser (VCSEL) sein. Dabei handelt es sich um bevorzugte Laserlichtquellen, die sich gegenüber einem herkömmlichen Laser, bspw. einem HeNe-Laser (Helium-Neon), durch eine kompakte Bauweise, einen niedrigen Energieverbrauch und eine hohe Stabilität der Wellenlänge gegen Temperaturvariationen auszeichnen.

Unter einem Distributed Feedback Laser (DFB-Laser) wird im vorliegenden Zusammenhang eine Laserdiode verstanden, deren aktives Medium derart strukturiert ist, dass der Brechungsindex entlang der optischen Achse periodisch variiert.

Unter Distributed Bragg Reflector Lasern (DBR-Lasern) werden im vorliegenden Zusammenhang Laserdioden verstanden, deren aktives Medium an einem Ende durch einen Bragg-Spiegel (engl. *Distributed Bragg Reflector,* DBR) begrenzt ist und bei dem am anderen Ende ein herkömmlicher Auskoppelspiegel angebracht ist.

Unter Oberflächenemitter-Laserdioden (engl.: *vertical-cavity surface-emitting laser;* VCSEL) werden im vorliegenden Zusammenhang Laserdioden verstanden, bei denen das Licht senkrecht zur Ebene des Halbleiterchips abgestrahlt wird. Der Laserresonator wird dabei durch zwei parallel zur Ebene des Wafer angeordnete Bragg-Spiegel gebildet, zwischen denen das Lasermedium eingebettet ist.

Allerdings kann es sich bei der Laserlichtquelle auch um einen Diodenlaser anderer Bauart handeln. Je nach Art des Diodenlasers kann es vorteilhaft sein, wenn die Wellenlänge des von diesem bereitgestellten Lichtes durch ein bandenbegrenzendes Element, insbesondere durch ein Volumen-Bragg-Gitter (VBG) stabilisiert ist. Dies verleiht der Laserlichtquelle insbesondere eine höhere Stabilität der Laserwellenlänge gegen Temperaturvariationen. Ein Aspekt der Anmeldung bezieht sich auf eine Verwendung eines erfindungsgemässen Referenzinterferometers zur Überprüfung einer optischen Weglängenänderung in Interferometerarmen gemäß Anspruch 9.

Die vorliegende Erfindung betrifft darüber hinaus ein Interferometer mit einem oben beschriebenen Referenzinterferometer zur Überprüfung einer optischen Weglängenänderung in Interferometerarmen, insbesondere umfassend eine Lichtquelle für einen Nutzstrahl und mehrere optische Elemente. Bei bestimmungsgemässem Betrieb sind ein Nutzstrahl und ein Lichtstrahl der Laserlichtquelle durch denselben Strahlteiler führbar, wobei der Lichtstrahl der Laserlichtquelle einen Referenzstrahl darstellt.

Das erfindungsgemässe Interferometer ist dadurch gekennzeichnet, dass dem Strahlteiler im Strahlengang wenigstens ein Prisma vorgelagert ist, mit welchem der im wesentlichen parallel zum Nutzstrahl auf den Strahlteiler zulaufende Referenzstrahl umgelenkt werden kann; und/oder dem Strahlteiler im Strahlengang wenigstens ein Prisma nachgelagert ist, mit welchem der schräg zum Nutzstrahl vom Strahlteiler weg sich ausbreitende Referenzstrahl gebrochen werden kann, sodass der Nutzstrahl und der Referenzstrahl im wesentlichen parallel zueinander vom Interferometer weglaufen.

Insbesondere umfasst das Interferometer wenigstens ein Prisma, welches dem Strahlteiler im Strahlengang vorgelagert ist, und/oder wenigstens ein Prisma, welches dem Strahlteiler im Strahlengang nachgelagert ist.

Ein damit erzielter Vorteil ist insbesondere darin zu sehen, dass eine Quadraturdetektion im Interferometer besonders einfach möglich ist, wenn der Nutzstrahl und der Referenzlichtstrahl durch denselben Strahlteiler geführt werden. Das Interferometer erweist sich auch als besonders präzise. Der Referenzstrahl ist über interne Totalreflexion an einer Oberseite und Unterseite des Strahlteilers geführt. Diese Geometrie erlaubt eine besonders einfache und kompakte Bauweise des Interferometers.

Die Lichtquellen sind so positioniert, dass der Nutzstrahl und der Referenzstrahl im Wesentlichen parallel zueinander auf das Interferometer zulaufen und/oder ein im Strahlengang nachgelagertes Prisma so positioniert ist, dass der Nutzstrahl und der Referenzstrahl im Wesentlichen parallel zueinander vom Interferometer weglaufen. Der Strahlengang des Nutzstrahls bzw. des ersten und zweiten Teils des Nutzstrahls verläuft dabei bevorzugt auf der zentralen x-Achse und der zentralen z-Achse.

Unter bestimmungsgemässem Betrieb wird vorliegend verstanden, dass ein Nutzstrahl und ein Referenzstrahl einer Laserlichtquelle durch denselben Strahlteiler führbar sind. Bevorzugt breiten sich bei bestimmungsgemässem Betrieb Nutz- und Referenzstrahl parallel zueinander in Richtung des Interferometers mit Prisma aus. Der Referenzstrahl wird vor dem Auftreffen auf die Strahlteilerschicht durch das dem Strahlteiler im Strahlengang vorgelagerte Prisma gebrochen. Zusätzlich oder alternativ breiten sich beim bestimmungsgemässem Betrieb Nutz- und Referenzstrahl nach Verlassen des Interferomters mit Prisma wieder parallel zueinander aus. Hierzu wird der Referenzstrahl nach Verlassen der Strahlteilerschicht durch das dem Strahlteiler im Strahlengang nachgelagerte Prisma gebrochen. Innerhalb des Interferometers mit Prisma / mit Prismen breiten sich Nutz- und Referenzstrahl bei bestimmungsgemässem Betrieb nicht parallel zueinander aus.

In einer bevorzugten Ausführungsform wird der Referenzstrahl parallel versetzt zum Nutzstrahl, insbesondere oberhalb oder unterhalb des Nutzstrahls auf das Prisma, auf den Strahlteiler und von da aus auf die erste Seitenfläche des Strahlteiler, insbesondere die Ober - respektive Unterseite des Strahlteilers, gelenkt, sodass die Strahlen auf den im Wesentlichen gleichen Bereich wie der Nutzstrahl auf das Spiegelelement auftreffen. Dies hat den Vorteil, dass die Strahlen auf den Spiegeln des Interferometers auf überlappende Flächen fallen. Bevorzugt befindet sich der überlappende Bereich der Einfallsflächen der beiden Strahlen im Zentrum der Spiegelfläche des Spiegelelements.

Dadurch ergibt sich eine optimale Genauigkeit des Aufbaus. Denn durch die (praktisch kaum vollständig vermeidbare) dynamische Spiegeldeformation beim Interferometerbetrieb ergeben sich Änderungen auf die Strahlenführung, welche sich aber in der bevorzugten Ausführungsform gleichermassen auf den Nutz- und den Referenzstrahl auswirken. Dadurch wird eine optimale Referenzierung der optischen Weglängenunterschiede ermöglicht.

Das erfindungsgemässe Interferometer ermöglicht also eine getrennte Führung von Nutz- und Referenzstrahl beim Eintritt in und beim Austritt aus dem Strahlteiler und gleichzeitig ein Zusammenführen der Strahlen auf den überlappenden Flächen der jeweiligen Spiegelelemente. Damit wird den Anliegen der Kompaktheit, Präzision und Kosteneffizienz Rechnung getragen.

Günstig ist es, wenn das Interferometer als Zweistrahlinterferometer ausgebildet ist. Besonders bevorzugt ist dieses Teil eines Fourier-Transformationsspektrometers, insbesondere als monolithisches Michelson-Interferometer ausgebildet.

Zweckmässig ist es, wenn das Referenzinterferometer zur Quadraturdetektion ausgebildet ist, um eine relative optische Weglängenänderung in den Interferometerarmen des Interferometers zu messen.

Bevorzugt ist ein Interferometer wie vorstehend beschrieben, dadurch gekennzeichnet, dass der Eintrittsort des Referenzstrahls in das dem Strahlteiler vorgelagerte Prisma und/oder der Eintrittsort des Nutzstrahls in den Strahlteiler mit Antireflexbeschichtungen versehen sind; bevorzugt ist die Antireflexbeschichtung am Eintrittsort des Referenzstrahls in das dem Strahlteiler vorgelagerte Prisma an die Wellenlänge des Referenzstrahls angepasst und es ist die Antireflexbeschichtung am Eintrittsort des Nutzstrahls in den Strahlteiler an den Wellenlängenbereich des Nutzstrahls angepasst. Eine teure Antireflexbeschichtung, welche sowohl das Spektrum des Nutz- als auch dasjenige des Referenzstrahls abdeckt, ist nicht notwendig.

Es ist ein Vorteil eines in das Nutzinterferometer integrierten und erfindungsgemässen Referenzinterferometers, dass der Nutzstrahl und der Referenzstrahl parallel aber räumlich versetzt auf den Strahlteiler einfallen können. Die Parallelität erlaubt besonders optimale Vergleichbarkeit der Eigenschaften der beiden Strahlen, welche gleichzeitig über überlappende Flächen der gleichen Spiegelelemente geführt werden. Die räumliche Versetzung beim Eintritt in den Strahlteiler kann aber dank dem erfindungsgemässen Aufbau dennoch so gross gewählt werden, dass kostengünstigere Antireflexbeschichtungen, je angepasst an die Wellenlängen des Referenz- bzw. Nutzstrahls, verwendet werden können.

Bei einem kombinierten Nutzinterferometer und Referenzinterferometer ist es bevorzugt, wenn das im Strahlengang des Referenzstrahls befindliche Prisma oder die im Strahlengang des Referenzstrahls befindlichen Prismen aus einem Material gefertigt sind, welche für die Wellenlänge des Referenzstrahls besonders gut durchlässige, für die Wellenlängen des Nutzstrahls aber undurchlässig sind. Dadurch kann eine unerwünschte Überlagerung des Referenzlichtstrahls mit Streulicht des Nutzstrahls vermieden werden.

Die vorliegende Erfindung betrifft darüber hinaus ein Spektrometer, insbesondere Nah-Infrarot-Spektrometer, mit einem Interferometer wie oben beschrieben.

Ein weiterer Aspekt der Erfindung betrifft ein Verfahren zur Bestimmung einer optischen Weglängenänderung, insbesondere einer relativen optischen Weglängenänderung in Interferometerarmen, gemäß Anspruch 15 wobei von einer Laserlichtquelle ein Lichtstrahl als Referenzstrahl auf einen Strahlteiler gestrahlt wird, und mittels totaler interner Reflexion über eine erste Seitenfläche, insbesondere eine Oberseite, des Strahlteilers und eine zweite Seitenfläche, insbesondere eine Unterseite, des Strahlteilers geführt wird, dadurch gekennzeichnet dass der Lichtstrahl vor dem Eintritt in den Strahlteiler über wenigstens ein erstes Prisma und/oder nach dem Austritt aus dem Strahlteiler durch wenigstens ein zweites Prisma geführt wird.

Es wird erreicht, dass bei einem Verfahren der genannten Art der Lichtstrahl der Laserlichtquelle als Referenzstrahl mittels totaler interner Reflexion über eine erste Seitenfläche, insbesondere eine Oberseite, und eine zweite Seitenfläche, insbesondere eine Unterseite, des Strahlteilers geführt wird.

Ein damit erzielter Vorteil ist insbesondere darin zu sehen, dass über die totale interne Reflexion bzw. interne Totalreflexion an der ersten Seitenfläche und/oder der zweiten Seitenfläche, insbesondere einer Oberseite und/oder Unterseite, des Strahlteilers eine optische Weglängenänderung des Nutzstrahles besonders einfach und effizient gemessen werden kann. Dies ist ein Effekt der Phasenverschiebung mittels totaler interner Reflexion (statt mittels des üblichen Retarderplättchens). Das Interferometer kann sehr kompakt (auch monolithisch) gebaut werden, was Vorteile bringt hinsichtlich der mechanischen Robustheit. Der Vorteil wird durch die genaue, flexible und platzsparende Strahlführung mittels vorgelagertem und/oder nachgelagertem Prisma noch verstärkt.

Es ist bevorzugt, dass in dem Verfahren wie vorstehend beschrieben der Lichtstrahl sich in einem ersten Abschnitt des Strahlengangs vor dem Eintritt in das erste Prisma auf der zentralen z-Achse oder parallel zur zentralen z-Achse ausbreitet; in einem mittleren Abschnitt des Strahlengangs schräg zur zentralen z-Achse ausbreitet; und/oder in einem dritten Abschnitt des Strahlengangs nach dem Austritt aus dem zweiten Prisma auf der zentralen x-Achse oder parallel zur zentralen x-Achse geführt wird.

Der Ausdruck ,schräg' meint dabei, dass die Ausbreitungsrichtung anders als parallel oder senkrecht zur jeweiligen Interferometerarm-Achse ist. Eine solche Strahlenführung erlaubt eine orthogonale Ausrichtung der wichtigsten optischen Elemente, insbesondere Lichtquelle(n), Strahlteiler, Interferometerarme, Spiegel und Detektor(en) und macht den Verfahrensaufbau präzise.

Günstig ist es, wenn eine Polarisation des Referenzstrahles verändert wird. Hierfür wird der Strahlteiler zumindest teilweise beschichtet, wobei wie oben beschrieben mithilfe einer einfachen Schicht geeigneter Brechzahl eine Grösse einer Phasenverschiebung kontrolliert wird.

Es ist bevorzugt, dass parallel zum Referenzstrahl ein Nutzstrahl auf den Strahlteiler gelenkt wird. Insbesondere im Interferometer mit Michelson-Aufbau werden der Referenz- und der Nutzstrahl über die gleiche Strahlteilerschicht und die gleichen Spiegelelemente des Interferometers gelenkt. Der Nutzstrahl und der Referenzstrahl können sodann insbesondere parallel zueinander aus dem Strahlteiler austreten. Dadurch wird die Messung der optischen Weglängendifferenz besonders präzise, während der kompakte Verfahrensaufbau beibehalten werden kann.

Insbesondere bei einem als Quader oder Würfel ausgebildeten Strahlteiler ist es vorteilhaft, wenn der Referenzstrahl und der Nutzstrahl aus voneinander unterschiedlichen Winkeln auf die frontale Strahlteilerseitenfläche geführt werden. Insbesondere wird der Nutzstrahl mit einem Einfallswinkel von weniger als 7°, vorzugsweise weniger als 3°, bevorzugterweise weniger als 1°, zur Flächennormalen der frontalen Strahlteilerseitenfläche, durch welche die Strahlen eintreten, geführt. In einer bevorzugten Ausführungsform wird der Nutzstrahl mit einem Einfallswinkel von 0° zur Flächennormalen der frontalen Strahlteilerseitenfläche, durch welche die Strahlen eintreten, geführt. Im Unterschied dazu wird die optische Achse des Referenzstrahls nach Durchlaufen des Prismas in einem schrägen Einfallswinkel auf die Strahlteilerseitenfläche, durch welche die Strahlen eintreten, geführt, beispielsweise mit einem Winkel von 30° bis 89°, vorzugsweise 50° bis 85°, bevorzugterweise 65° bis 80°, zur y-Achse. Je nach Ausführung ist allerdings auch ein Einfallswinkel von 65° bis 88°, vorzugsweise von 70° bis 83°, bevorzugterweise von 75° bis 78° zur y-Achse vorteilhaft. In einer besonders bevorzugten Ausführungsform wird der Referenzstrahl mit einem Einfallswinkel von 76,5° zur y-Achse geführt.

Vorteilhaft ist es weiter, wenn der Referenzstrahl und der Nutzstrahl von zumindest einem Detektor erfasst werden. Insbesondere sind zwei Detektoren vorgesehen, wobei der Referenzstrahl und der Nutzstrahl erfasst werden. Zudem kann es günstig sein, wenn für den als Referenzstrahl ausgebildeten Lichtstrahl ein Polarisationsstrahlteiler vor dem Detektor angeordnet ist. In diesem Fall sind insgesamt zumindest drei Detektoren erforderlich.

Weitere Merkmale, Vorteile und Wirkungen ergeben sich aus dem nachfolgend dargestellten Ausführungsbeispiel. In den Zeichnungen, auf welche dabei Bezug genommen wird, zeigen:
- Fig. 1a: eine aus dem Stand der Technik bekannte Vorrichtung zur Quadraturdetektion;
- Fig. 1b: Interferometer gemäss EP17205704.4;
- Fig. 2: Schematische Darstellung eines erfindungsgemässen Interferometers bei bestimmungsgemässem Betrieb;
- Fig. 3: Bevorzugte Ausführungsform eines erfindungsgemässen Interferometers bei bestimmungsgemässem Betrieb im Grundriss;
- Fig. 4: Alternative Ausführungsform eines erfindungsgemässen Interferometers im Grundriss;
- Fig. 5: Ansicht eines Strahlengangs in einem Interferometerarm im AA-Schnitt gem. Fig. 4, inkl. Referenzstrahl und Nutzstrahl;
- Fig. 6: Ansicht eines Strahlengangs in einem Referenzinterferometerarm im BB-Schnitt gem. Fig. 4 mit Referenzstrahl, ohne Nutzstrahl;
- Fig. 7: Schematische Darstellung eines Strahlengangs im erfindungsgemässen Interferometer im BB-Schnitt mit Referenzstrahl und Nutzstrahl, inkl. Details zur Phasenverschiebung;
- Fig. 8: Beispielhafte Darstellung der Phasen von s- und ppolarisiertem Licht eines Referenzstrahls in Abhängigkeit der Schichtdicke der Retarderschicht;
- Fig. 9: Darstellung einer Differenz zwischen einer Phasenverschiebung für unterschiedlich polarisiertes Licht, simulierte Werte;
- Fig. 10: Darstellung einer Differenz zwischen einer Phasenverschiebung für unterschiedlich polarisiertes Licht, simulierte Werte und Daten aus der experimentellen Verifikation.

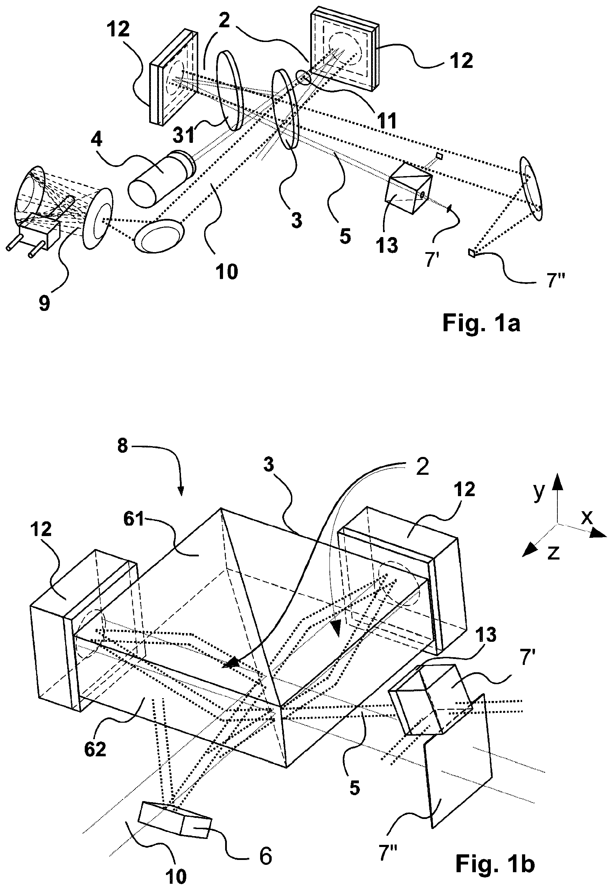

Fig. 1a zeigt eine aus dem Stand der Technik bekannte Vorrichtung zur Quadraturdetektion. Diese Vorrichtung umfasst ein Michelson-Interferometer mit einem Referenzinterferometer für eine konventionelle Quadraturdetektion. Weiter umfasst die Vorrichtung eine Laserlichtquelle 4 sowie eine weitere Lichtquelle 9. Ein als Referenzstrahl ausgebildeter Lichtstrahl 5 und ein Nutzstrahl 10 sind an der Position eines λ/4-Plättchens 11 räumlich voneinander getrennt, wofür der Referenzstrahl verkippt ist. Die Vorrichtung umfasst weitere optische Elemente wie einen Strahlteiler 3, Spiegel 12, Detektoren 7', 7", ein Kompensatorelement 31 und einen Polarisationsstrahlteiler 13. Um einen Wegunterschied daraus resultierend, dass der am Strahlteiler 3 reflektierte Strahl den Strahlteiler 3 nicht durchquert, zu kompensieren, weist die Vorrichtung ein Plättchen 31 auf, welches aus demselben Material und in derselben Dicke wie der Strahlteiler 3 ausgebildet ist. Das Retarderplättchen 11 ist so ausgerichtet, dass es aus dem einfallenden Referenzstrahl zwei orthogonale Polarisationen (s- und p-Polarisationen) erzeugt, die eine Phasendifferenz zueinander haben. Vorzugsweise wird ein Retarder 11 so gewählt, dass eine Phasendifferenz von 90° (oder π/2) resultiert.

In Fig. 1b ist ein Interferometer 8 gemäss der in EP3495766 offenbarten Lehre gezeigt, bei bestimmungsgemässem Betrieb. Das Interferometer 8 ist als Michelson-Interferometer in monolithischer Bauweise ausgebildet. Das Referenzinterferometer 1 umfasst eine in Fig. 1b nicht dargestellte Laserlichtquelle, welche einen Lichtstrahl 5 emittiert. Darüber hinaus ist ein als Strahlteilerquader ausgebildeter Strahlteiler 3 vorgesehen. Das Interferometer 8 umfasst weiter eine in Fig. 1b nicht dargestellte Lichtquelle, welche einen Nutzstrahl 10 emittiert. Sowohl der Nutzstrahl 10 als auch der als Referenzstrahl ausgebildete Lichtstrahl 5 werden durch den Strahlteiler 3 geführt. Der Referenzstrahl kann mittels Spiegel 6 auf den Strahlteiler gelenkt sein. Wie beschrieben kann alternativ vorgesehen sein, dass die Laserlichtquelle an der Stelle des Spiegels 6 positioniert und gegenüber dem Nutzstrahl 10 verkippt ist. Weiter ist der Referenzstrahl mittels interner Totalreflexion über eine Oberseite 61 und Unterseite 62 des Strahlteilers 3 geführt. Die Oberseite 61 und/oder Unterseite 62 des Strahlteilers 3 ist beispielsweise mit Hafniumdioxid beschichtet. Die Beschichtung des Strahlteilers ersetzt das λ/4-Plättchen 11 einer bekannten Vorrichtung gemäss Fig. 1a. Ferner umfasst das Interferometer 8 einen ersten Detektor 7` sowie einen zweiten Detektor 7" und einen Polarisationsstrahlteiler 13 zur Detektion des als Referenzstrahl ausgebildeten Lichtstrahles 5 und des Nutzstrahles 10. Dabei ist der Polarisationsstrahlteiler 13 vor dem ersten Detektor 7' angeordnet ist, welcher zur Detektion des Referenzstrahles vorgesehen ist. Weiter kann es vorgesehen sein, dass Spiegel 12, insbesondere bewegbare Spiegel 12, am Strahlteiler 3, insbesondere mittels direkt am Strahlteiler 3 aufgeklebten Spiegelgehäusen, montiert sind. Die Spiegel 12 sind als Mikrosystemtechnikkomponenten (MEMS-Komponenten) ausgebildet.

Der Phasenunterschied zwischen s- und p-polarisierten Referenzstrahlen im gezeigten Interferometer wird durch die Totalreflexion eines Teilstrahls an der Oberseite 61 und/oder an der Unterseite 62 des Strahlteilerkörpers erzeugt. Durch die Beschichtung der Ober- oder der Unterseite in einem Interferometerarm kann die Phasendifferenz eingestellt werden. Die Phasendifferenz ist abhängig von Brechungsindex und Dicke der Retarderschicht, vom Brechungsindex des Strahlteilerkörpermaterials, vom Einfallswinkel auf die Retarderschicht sowie von der Wellenlänge der Referenzlichtquelle.

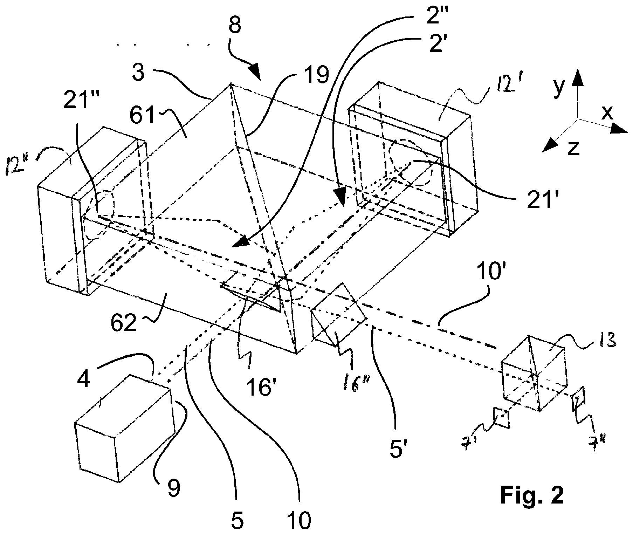

In Fig. 2 ist eine schematische Darstellung eines Interferometers 8 mit erfindungsgemässer Strahlenführung gezeigt. Der Strahlteiler 3 ist als Prisma realisiert. Es sind aber auch andere Geometrien realisierbar. Der Referenzstrahl 5, 5' ist durch gepunktete Linien dargestellt. Der Nutzstrahl 10, 10' ist durch eine strichpunktierte Linie dargestellt. Das Interferometer umfasst ein erstes, dem Strahlteiler im Strahlengang vorgelagertes Prisma 16` und ein zweites, dem Strahlteiler im Strahlengang nachgelagertes Prisma 16".

Es ist zu bemerken, dass in Figur 2 ein Interferometer (8) bei bestimmungsgemässem Betrieb gezeigt ist. D.h. es werden ein Referenzstrahl 5,5` und ein Nutzstrahl 10,10` durch denselben Strahlteiler 3 geführt. In einem ebenfalls erfindungsgemässen Referenzinterferometer würde bei bestimmungsgemässem Betrieb nur ein Referenzstrahl 5,5` durch den Strahlteiler 3 geführt.

Die optische Achse des Nutzstrahls 10 verläuft zunächst auf der zentralen z-Achse. Nach dem Teilen des Strahls 10 an der Strahlteilerschicht 19 verläuft die optische Achse eines ersten Teils des Nutzstrahls 10 in einem ersten Interferometerarm 2` des Interferometers weiter auf der zentralen z-Achse, d.h. auf der Flächennormalen zur Spiegelfläche eines ersten Spiegelelements 12` durch dessen Mitte 21`. Die optische Achse des zweiten Teils des Nutzstrahls 10 verläuft im zweiten Interferometerarm 2" auf der zentralen x-Achse, d.h. auf der Flächennormalen zur Spiegelfläche eines zweiten Spiegelelements 12" durch dessen Mitte 21".

Die optischen Achsen von Nutzstrahl 10 und Referenzstrahl 5 vor dem Einfall in das vorgelagerte Prisma 16` sind parallel. Durch die Lichtbrechung an der schrägen Eintrittsfläche respektive am vorgelagerten Prisma 16` wird der Referenzstrahl 5 gegen die Oberseite 61 des Strahlteilerkörpers hin gebrochen. Der Referenzstrahl verläuft also im Strahlteiler 3 nicht mehr parallel zur x- oder zur z-Achse. Eine Fläche des Prismas 16` kann mit einer Antireflexbeschichtung für die Laserwellenlänge des Referenzstrahls versehen sein. Die darunterliegende Fläche, durch welche der Nutzstrahl in den Strahlteilkörper eintritt, kann mit einer Antireflexbeschichtung für den Wellenlängenbereich des Nutzstrahls versehen sein. Die an der Strahlteilerschicht gebildeten Teilstrahlen des Referenzstrahls werden sowohl im ersten als auch im zweiten Interferometerarm an der gemeinsamen Seitenfläche, konkret an der Oberseite 61, totalreflektiert und fallen sodann auf die Mitte 21' des Spiegels 12' im ersten Interferometerarm 2' respektive auf die Mitte 21" des Spiegels 12" im zweiten Interferometerarm 2".

Die Einfallsstellen von Nutz- und Referenzstrahlen überlappen räumlich auf dem jeweiligen Mittelpunkt der Spiegel 12` und 12", wodurch die optimale Referenzierung des Interferogramms sichergestellt wird.

Der Nutzstrahl 10` tritt nach dem zweiten Passieren der Strahlteilerschicht 19 auf der zentralen x-Achse aus dem Strahlteilerkörper 3 wieder aus.

Nach Totalreflexion an der Unterseite 62 des Strahlteilerkörpers 3 und nach Reflexion bzw. Transmission an der Strahlteilerfläche 19 verlassen die Referenzstrahlen den Strahlteilerkörper 3. Beim Austritt aus dem Strahlteilerkörper sind die optischen Achsen von Referenz- und Nutzstrahl noch nicht parallel. Der Referenzstrahl 5` wird daher durch das im Strahlengang nachgelagerte Prisma 16" so gebrochen, dass er zum Nutzstrahl 10` und damit zur x-Achse parallel ausgerichtet wird.

Der Referenzstrahl 5' wird nach dem Austritt aus dem Strahlteilerkörper und Brechung an der Prismafläche 16" durch einen polarisierenden Strahlteiler 13 in s- und p-polarisierte Teilstrahlen aufgeteilt, welche je auf den Detektoren 7' bzw. 7" detektiert werden.

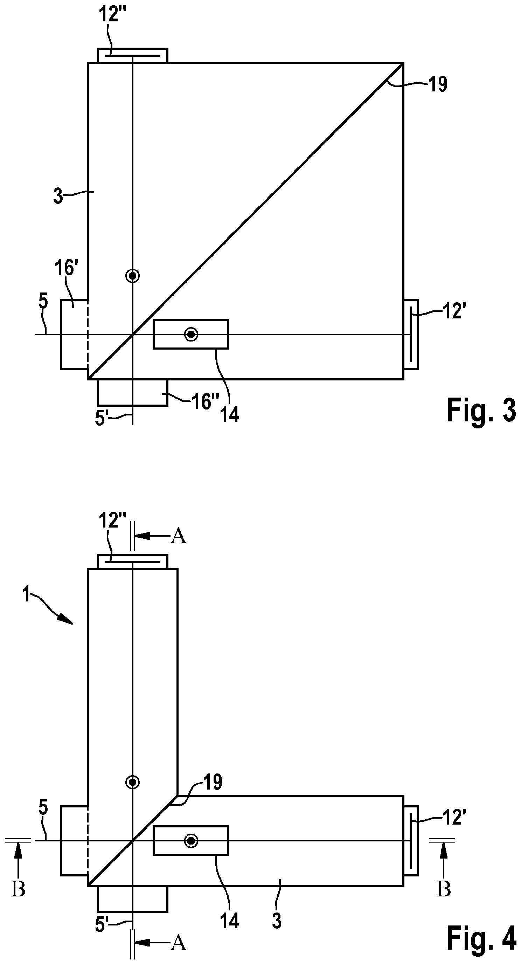

In Fig. 3 ist ein Grundriss eines erfindungsgemässen Referenzinterferometers 1 gezeigt. Genauer zeigt Fig. 3 den Strahlengang eines Referenzstrahls 5, 5' durch einen Strahlteiler 3, an welchem zwei bewegliche Spiegel 12', 12" angeordnet sind. Der Strahlteiler 3, insbesondere wenigstens eine Seitenfläche des Strahlteilers 3, ist teilweise mit einer Hafniumdioxid-Schicht 14 beschichtet, welche eine Brechzahl von 1,82 bei der Laserwellenlänge von 638 nm aufweist. Der Strahlteiler 3 selbst ist aus Quarzglas mit einer Brechzahl von 1,46 ausgebildet. Der Referenzstrahl 5 tritt auf dem Bild von links in den Strahlteilerkörper ein, wird durch Prisma 16` gebrochen und wird an der Strahlteilerschicht in zwei Teilstrahlen aufgeteilt. Der transmittierte Teil trifft sodann auf die Retarder-Beschichtung 14, welche hier auf der Oberseite des Strahlteilerkörpers ausgebildet ist. Nach totaler interner Reflexion an Fläche 14 trifft der Referenzstrahl auf den Spiegel 12` und hernach auf die Unterseite des Strahlteilerkörpers, wo er erneut totalreflektiert wird. Das Geliche gilt sinngemäss für den Teilstrahl, der an der Strahlteilerschicht reflektiert wird und via die Oberseite des Strahlteilerkörpers auf Spiegel 12" gelenkt wird. Die Strahlen werden an der Strahlteilerschicht 19 wieder vereinigt und verlassen das Interferometer, um in Prisma 16" nochmals gebrochen zu werden. Die offenen Kreise bezeichnen die Auftrittsbereiche des Referenzstrahls auf die Oberseite des Strahlteilerkörpers.

Fig. 4 zeigt ein alternatives Ausführungsbeispiel des erfindungsgemässen Referenzinterferometers 1 im Grundriss. Sie unterscheidet sich vom Ausführungsbeispiel nach Fig. 3 dadurch, dass der Strahlteilerkörper nicht als Quader, sondern als L-förmige Struktur mit zwei individuell ausgebildeten Interferometerarmen bereitgestellt wird.

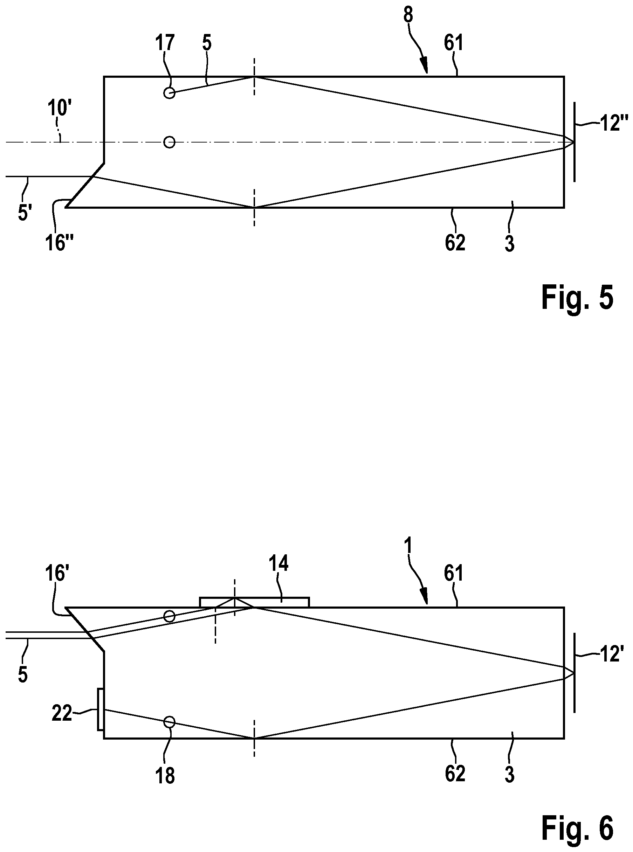

Die Figuren 5 und 6 zeigen jeweils einen Schnitt durch das erfindungsgemässe Interferometer 8, wobei der Schnitt in Fig. 5 entlang dem Interferometerarm ohne Retarderschicht erfolgt ist (senkrechter Arm in Fig. 4, AA-Schnitt). Fig. 6 dagegen zeigt einen Schnitt durch den Interferometerarm, welcher die Retarder-beschichtung 14 aufweist (horizontaler Arm in Fig. 4, BB-Schnitt).

Der obere offene Kreis 17 in Fig. 5 markiert die Stelle, wo der Referenzstrahl in die Strahlteilerschicht 19 eintritt, um seinen Weg über zwei Seitenflächen des Interferometerarms und ein Spiegelelement (12") zu absolvieren. Die optische Achse des Referenzstrahls ist durch die ausgezogene Linie, diejenige des Nutzstrahls durch die strichpunktierte Linie dargestellt. Der Referenzstrahl 5 tritt über die geneigte Eintrittsfläche des Prismas 16' (nicht gezeigt) in den Strahlteilerkörper ein. Nach Reflexion an der Strahlteilerschicht 19 (nicht gezeigt), Totalreflexion an der Oberseite 61, Reflexion am Spiegel 12", Totalreflexion an der Unterseite 62 des Strahlteilerkörpers und Transmission durch die Strahlteilerschicht 19 (nicht gezeigt) verlässt der Strahl das Interferometer durch die Prismafläche 16" wieder. Nach dem Verlassen des Interferometers verläuft der Referenzstrahl 5' parallel zum reflektierten Nutzstrahl 10'.

Fig. 6 zeigt den Strahlengang des Teils des Referenzstrahls, welcher durch die Strahlteilerschicht 19 (nicht gezeigt) transmittiert wird. Der Referenzstrahl 5 tritt von links über die geneigte Fläche des Prismas 16' in den Strahlteilerkörper ein, um seinen Weg über zwei Seitenflächen 61, 62 des Interferometerarms 2' und das Spiegelelement 12' zu absolvieren. Die optische Achse des Referenzstrahls ist durch die ausgezogene Linie dargestellt. Nicht gezeigt ist in dieser Darstellung der Nutzstrahl. Nach Totalreflexion an der Retarderschicht 14, Reflexion am Spiegel 12' und Totalreflexion an der Unterseite 62 verlässt der Strahl den Strahlkörper via Strahlteilerschicht 19 (nicht gezeigt) wieder. Der untere offene Kreis 18 in Fig. 6 markiert die Stelle, wo der Referenzstrahl von der Strahlteilerschicht weg und aus dem Strahlteiler hinaus gelenkt wird. Nach der Brechung durch das Prisma 16" (nicht gezeigt) verläuft der Referenzstrahl 5' parallel zum reflektierten Nutzstrahl (nicht gezeigt). Ein geringer Teil des vom Spiegel 12' reflektierten Referenzstrahls wird durch die Strahlteilerschicht 19 transmittiert. Dieser transmittierte Anteil verlässt entweder das Interferometer in Richtung Referenzlichtquelle oder wird, wie gezeigt, durch eine opake Beschichtung 22 absorbiert.

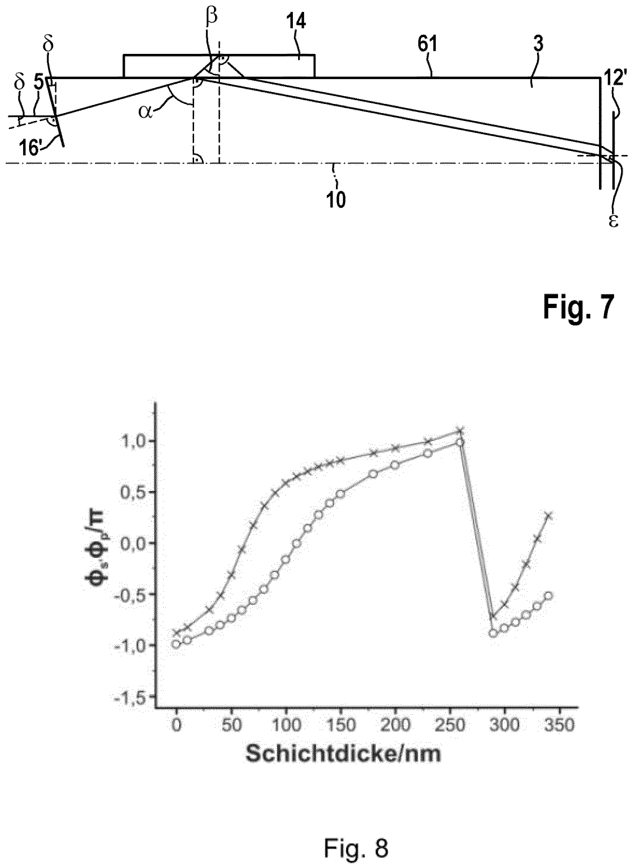

Fig. 7 zeigt ein Beispiel einer Phasenverschiebung von senkrecht und parallel (s- und p-) polarisiertem Licht eines Referenzstrahls resultierend aus totaler interner Reflexion an einer Retarderschicht 14. Im gezeigten Beispiel trifft ein Laserstrahl 5 mit einer Wellenlänge Ä=638nm auf eine Eintrittsfläche des Prismas 16`, wobei die Normale der Eintrittsfläche für den Referenzstrahl 5 gegenüber der optischen Achse des Referenzstrahls 5 um den Winkel 5 geneigt ist. Der Strahl tritt unter dem Einfallswinkel α von etwa 76,5° zur Normalen auf die Grenzfläche zwischen dem Quarzglas des Strahlteilers 3 und der HafniumdioxidSchicht 14. Mit einer einfachen Schicht eines Materials von geeigneter Brechzahl ist die Grösse der Phasenverschiebung kontrollierbar. Die Phasenverschiebung resultiert, wenn der Laserstrahl an der Grenzschicht zwischen dem Quarzglas des Strahlteilers 3 mit einer Brechzahl von beispielsweise n₁=1,46 und der Hafniumdioxid-Schicht 14 mit einer Brechzahl von beispielsweise n₂=1,82 totale interne Reflexion erfährt. Ein Winkel β zur Flächennormalen der Hafniumdioxid-Schicht 14 beträgt etwa 49,7°. Wie aus der Figur ersichtlich ist, übernimmt die HafniumdioxidSchicht 14 die Funktion eines λ/4-Plättchens 11 gemäss einem herkömmlichen Referenzinterferometer wie in Fig. 1 gezeigt. Zur Phasenverschiebung tragen mehrere Effekte bei. Der Strahl 5 interferiert mit an der Grenzfläche zwischen dem Strahlteiler 3 und der Hafniumdioxid-Schicht 14 reflektierten Anteilen und mit Anteilen, die mehrfach in der Hafniumdioxid-Schicht 14 reflektiert werden, und somit eine grössere Phasenverschiebung akkumulieren. In der Summe führt dies zu einer mit einer Dicke der Hafniumdioxid-Schicht 14 periodischen Modulation. Der totalreflektierte Referenzstrahl tritt unter dem Winkel ε aus dem Strahlteilerkörper aus und schneidet die optische Achse des Nutzstrahls auf der Spiegelfläche (12`).

Fig. 8 zeigt eine schematische Darstellung der Phasenverschiebung von senkrecht und parallel (s- und p-) polarisierten Referenzstrahlen als Resultat von totaler interner Reflexion in Abhängigkeit von der Schichtdicke der Retarderschicht 14.

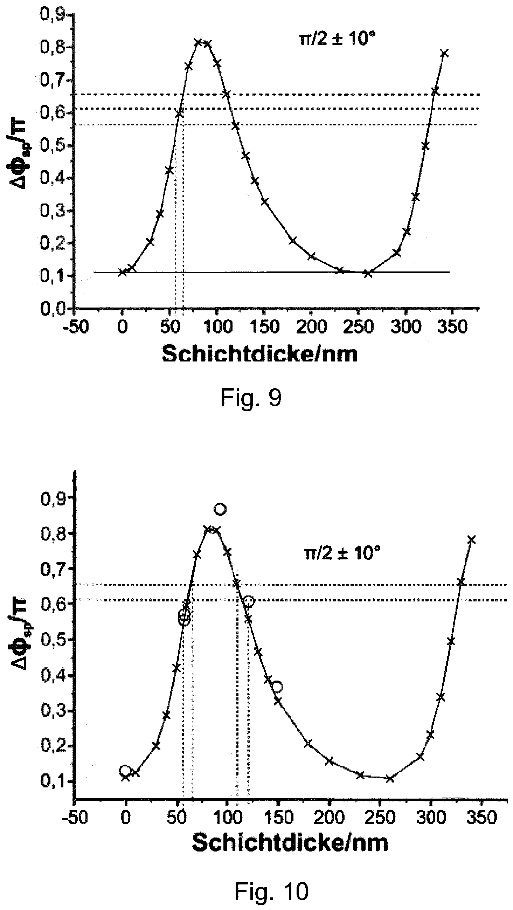

Fig. 9 zeigt die Differenz der Phasen vom jeweils s- und p-polarisiertem Licht des Referenzstrahls als Funktion der Dicke der Retarderschicht 14 bei interner Totalreflexion an einer Grenzfläche wie in Figur 7 gezeigt. Es ist ersichtlich, dass mit einer Dicke der Hafniumdioxid-Schicht von 60 nm oder 120 nm eine Phasenverschiebung von π/2 (entsprechend λ/4) erreicht wird. Durch eine Anpassung der Schichtdicke und/oder eines Schichtmaterials ist nahezu jede erwünschte Phasenverschiebung für beliebige Substratmaterialien und Einfallswinkel erreichbar.

Bei den in Fig. 10 dargestellten Daten handelt es sich um simulierte Daten, welche halbanalytisch manuell verifiziert wurden. Die Dicke der für die Messung verwendeten Hafniumdioxid-Schichten betrug etwa 58 nm, etwa 93 nm, etwa 121 nm und etwa 149 nm. Eine Phasenverschiebung zwischen s- und p-polarisiertem Licht wurde mit einem Testinterferometer vermessen. Fig. 10 zeigt einen Vergleich der theoretischen Werte gemäss Fig. 9 mit experimentellen Werten. Es ist ersichtlich, dass die experimentellen und theoretischen Werte gut übereinstimmen.

Grundsätzlich hängen genaue Werte einer Phasenverschiebung empfindlich von einer Dicke einer Beschichtung und einem Einfallswinkel des Lichtes ab. Bei einer Anwendung des Referenzinterferometers 1 zur Quadraturdetektion ist eine exakte Phasenverschiebung von λ/4 nicht essenziell, eine Abweichung von ± λ/20 ist durchaus zulässig, sodass auch produktionstechnische Toleranzen keine Schwierigkeiten darstellen.

## Patentansprüche

1. Referenzinterferometer (1) zur Bestimmung einer optischen Weglängenänderung, insbesondere einer relativen optischen Weglängenänderung in Interferometerarmen (2), umfassend einen Strahlteiler (3), der eine Strahlteilerschicht (19) aufweist, wobei die Strahlteilerschicht (19) für einen Lichtstrahl in einen ersten Interferometerarm (2') traversierbar ist und an der Strahlteilerschicht (19) der Lichtstrahl in einen zweiten Interferometerarm (2") reflektierbar ist, weiter umfassend Spiegelelemente (12',12"), wenigstens einen Detektor (7',7") und eine Laserlichtquelle (4),
**dadurch gekennzeichnet, dass**
der Strahlteiler (3) derart ausgebildet ist,
dass ein Lichtstrahl (5) der Laserlichtquelle (4) mittels totaler interner Reflexion über eine erste Seitenfläche und eine zweite Seitenfläche des Strahlteilers (3) führbar ist, wobei zumindest die erste Seitenfläche und/oder die zweite Seitenfläche des Strahlteilers (3), insbesondere teilweise, mit einer Beschichtung versehen ist/sind;
und wobei das Referenzinterferometer wenigstens ein Prisma (16',16") umfasst, wobei
- das Prisma (16') dem Strahlteiler (3) im Strahlengang vorgelagert ist, sodass ein in den Strahlteiler (3) eintretender Lichtstrahl (5) umgelenkt werden kann; und/oder
- das Prisma (16") dem Strahlteiler (3) im Strahlengang nachgelagert ist, sodass ein aus dem Strahlteiler (3) austretender Lichtstrahl (5') umgelenkt werden kann.

2. Referenzinterferometer (1) nach Anspruch 1, insbesondere ein Referenzinterferometer mit Michelson-Aufbau, wobei das wenigstens eine Prisma (16') so ausgebildet ist, dass ein im Wesentlichen auf der zentralen z-Achse oder parallel zur zentralen z-Achse auf den Strahlteiler zulaufender Lichtstrahl (5) gebrochen und schräg auf eine erste Seitenfläche des Strahlteilers (3) geführt werden kann, wobei die zentrale z-Achse die Flächennormale zur Spiegelfläche (21`) eines ersten Spiegelelements (12') an der Stirnseite des ersten Interferometerarms (2') ist; besonders bevorzugt ist ein gerades dreiseitiges Prisma, welches den Lichtstrahl auf eine erste Seitenfläche des Strahlteilers, insbesondere eine Oberseite (61) des Strahlteilers (3) lenken kann.

3. Referenzinterferometer (1) nach Anspruch 1, insbesondere ein Referenzinterferometer mit Michelson-Aufbau, wobei das wenigstens eine Prisma (16") so ausgebildet ist, dass ein schräg zur zentralen x-Achse vom Strahlteiler weglaufender Lichtstrahl (5') gebrochen und im Wesentlichen auf einen Verlauf auf der zentralen x-Achse oder parallel zur zentralen x-Achse geführt werden kann, wobei die zentrale x-Achse die Flächennormale zur Spiegelfläche (21") eines zweiten Spiegelelements (12") an der Stirnseite des zweiten Interferometerarms (2") ist; besonders bevorzugt ist ein gerades dreiseitiges Prisma, welches den von einer zweiten Seitenfläche des Strahlteilers her, insbesondere von einer Unterseite (62) her, eintretenden Lichtstrahl brechen kann.

4. Referenzinterferometer (1) nach einem der Ansprüche 1 bis 3, **dadurch gekennzeichnet, dass** zumindest eine Oberseite (61) und/oder eine Unterseite (62), des Strahlteilers (3), insbesondere teilweise, mit einer Beschichtung versehen ist/sind,
wobei unter einer Oberseite verstanden wird: eine erste Seitenfläche in einem ersten Interferometerarm und eine erste Seitenfläche in einem zweiten Interferometerarm, die auf einer gemeinsamen Ebene liegen, welche parallel ist zur Ebene, die durch die zentrale zentrale z-Achse und die zentrale x-Achse aufgespannt wird; und
wobei unter einer Unterseite verstanden wird: eine zweite Seitenfläche im ersten Interferometerarm und eine zweite Seitenfläche im zweiten Interferometerarm die auf einer gemeinsamen Ebene liegen, welche parallel ist zur Ebene, die durch die zentrale z-Achse und die zentrale x-Achse aufgespannt wird, und welche Ebene der Oberseite gegenüberliegt.

5. Referenzinterferometer (1) nach einem der Ansprüche 1 bis 4, **dadurch gekennzeichnet, dass** die Brechzahl und die Dicke der Beschichtung derart gewählt sind, dass bei einem mittels totaler interner Reflexion reflektierten Lichtstrahl (5) der Laserlichtquelle (4) eine Phasenverschiebung um π/2 ± π/10, vorzugsweise um π/2 ± π/20, zwischen s- und p-polarisierten totalreflektierten Strahlen erzielbar ist.

6. Referenzinterferometer (1) nach einem der Ansprüche 1 bis 5, **dadurch gekennzeichnet, dass** der Strahlteiler (3) als Parallelepiped, insbesondere als gerades Vierecksprisma, vorzugsweise als Quader, ausgebildet ist.

7. Referenzinterferometer (1) nach einem der Ansprüche 1 bis 6, **dadurch gekennzeichnet, dass** zwei photoelektrische Detektoren (7', 7") zur Detektion von zwei durch einen Polarisationsstrahlteiler (13) geteilte Teilstrahlen vorgesehen sind.

8. Referenzinterferometer (1) nach einem der Ansprüche 1 bis 7, **dadurch gekennzeichnet, dass** die Laserlichtquelle (4) ein Diodenlaser, insbesondere ein Distributed Feedback Laser, ein Distributed Bragg Reflector Laser oder ein Vertical Cavity Surface-Emitting Laser ist.

9. Verwendung eines Referenzinterferometers (1) nach einem der Ansprüche 1 bis 8 zur Überprüfung einer optischen Weglängenänderung in Interferometerarmen (2).

10. Interferometer (8) mit einem Referenzinterferometer (1) nach einem der Ansprüche 2 bis 8 zur Überprüfung einer optischen Weglängenänderung in Interferometerarmen (2), insbesondere umfassend eine zweite Lichtquelle (9) für einen Nutzstrahl (10) und mehrere optische Elemente, wobei bei bestimmungsgemässem Betrieb der Nutzstrahl (10) der Lichtquelle (9) und der Lichtstrahl (5) der Laserlichtquelle (4) durch denselben Strahlteiler (3) führbar sind, und wobei der Lichtstrahl (5) der Laserlichtquelle (4) einen Referenzstrahl darstellt,
wobei das dem Strahlteiler (3) im Strahlengang vorgelagerte wenigstens eine Prisma (16') so ausgebildet ist, dass ein im Wesentlichen parallel zur zentralen z-Achse auf den Strahlteiler (3) zulaufende Referenzstrahl (5) umgelenkt werden kann, und/oder
wobei das dem Strahlteiler (3) im Strahlengang nachgelagerte wenigstens eine Prisma (16") so ausgebildet ist, dass der Referenzstrahl (5') gebrochen werden kann, sodass der Referenzstrahl (5') im Wesentlichen parallel zur zentralen x-Achse vom Interferometer wegläuft.

11. Interferometer nach Anspruch 10, **dadurch gekennzeichnet, dass** das Interferometer (8) als Zweistrahlinterferometer ausgebildet ist.

12. Interferometer nach einem der Ansprüche 10 oder 11, **dadurch gekennzeichnet, dass** das Referenzinterferometer (1) zur Quadraturdetektion ausgebildet ist.

13. Interferometer nach einem der Ansprüche 10 bis 12, **dadurch gekennzeichnet, dass** der Eintrittsort des Referenzstrahls in das dem Strahlteiler vorgelagerte Prisma und/oder der Eintrittsort des Nutzstrahls in den Strahlteiler mit Antireflexbeschichtungen versehen sind; bevorzugt ist die Antireflexbeschichtungen am Eintrittsort des Referenzstrahls in das dem Strahlteiler vorgelagerte Prisma an die Wellenlänge des Referenzstrahls angepasst und es ist die Antireflexbeschichtung am Eintrittsort des Nutzstrahls in den Strahlteiler an den Wellenlängenbereich des Nutzstrahls angepasst.

14. Spektrometer, insbesondere Nah-Infrarot-Spektrometer, mit einem Interferometer (8) nach einem der Ansprüche 10 bis 13.

15. Verfahren zur Bestimmung einer optischen Weglängenänderung, insbesondere einer relativen optischen Weglängenänderung in Interferometerarmen (2), wobei von einer Laserlichtquelle (4) ein Lichtstrahl (5) als Referenzstrahl auf einen Strahlteiler (3) gestrahlt wird,
**dadurch gekennzeichnet, dass**
der Referenzstrahl mittels totaler interner Reflexion über eine erste Seitenfläche, insbesondere eine Oberseite (61), des Strahlteilers (3), und eine zweite Seitenfläche, insbesondere eine Unterseite (62), des Strahlteilers (3) geführt wird, wobei
der Lichtstrahl vor dem Eintritt in den Strahlteiler über wenigstens ein erstes Prisma (16') und/oder nach dem Austritt aus dem Strahlteiler über wenigstens ein zweites Prisma (16")geführt wird.

16. Verfahren nach Anspruch 15, wobei der Referenzlichtstrahl (5) sich
- in einem ersten Abschnitt des Strahlengangs, insbesondere vor dem Eintritt in das erste Prisma (16`), auf der zentralen z-Achse oder parallel zur zentralen z-Achse ausbreitet, wobei die zentrale z-Achse die Flächennormale zur Spiegelfläche (21') eines ersten Spiegelelements (12') in einem ersten Interferomenterarm (2') ist;
- in einem mittleren Abschnitt des Strahlengangs schräg zur zentralen z-Achse ausbreitet; und/oder
- in einem dritten Abschnitt des Strahlengangs, insbesondere nach dem Austritt aus dem zweiten Prisma (16"), auf der zentralen x-Achse oder parallel zur zentralen x-Achse ausbreitet, wobei die zentrale x-Achse die Flächennormale zur Spiegelfläche (21") eines zweiten Spiegelelements (12") in einem zweiten Interferometerarm (2") ist.

17. Verfahren nach Anspruch 15 oder 16, **dadurch gekennzeichnet, dass** eine Polarisation des Referenzstrahls (5) verändert wird.

18. Verfahren nach einem der Ansprüche 15 bis 17, **dadurch gekennzeichnet dass** parallel zum Referenzstrahl (5) ein Nutzstrahl (10) auf denselben Strahlteiler (3) gerichtet wird und über die Spiegelelemente (12', 12") gelenkt wird und der Nutzstrahl (10') parallel zum Referenzstrahl (5') aus dem Strahlteiler austritt.

19. Verfahren nach einem der Ansprüche 15 bis 18, **dadurch gekennzeichnet, dass** der Referenzlichtstrahl (5) und/oder der Nutzstrahl (10) von zumindest einem Detektor (7',7") erfasst werden.

## Claims

1. Reference interferometer (1) for determining an optical path length change, in particular a relative optical path length change in interferometer arms (2), comprising a beam splitter (3) which has a beam splitter layer (19), the beam splitter layer (19) being traversable for a light beam into a first interferometer arm (2') and the light beam being reflectable at the beam splitter layer (19) into a second interferometer arm (2"), further comprising mirror elements (12',12"), at least one detector (7', 7") and a laser light source (4), **characterized in that** the beam splitter (3) is designed in such a way that a light beam (5) of the laser light source (4) can be guided by means of total internal reflection over a first side face and a second side face of the beam splitter (3), at least the first side face and/or the second side face of the beam splitter (3) being provided, in particular partially, with a coating;
and wherein the reference interferometer comprises at least one prism (16', 16''), wherein
- the prism (16') is positioned in front of the beam splitter (3) in the beam path so that a light beam (5) entering the beam splitter (3) can be deflected; and/or
- the prism (16'') is positioned downstream of the beam splitter (3) in the beam path, so that a light beam (5') emerging from the beam splitter (3) can be deflected.

2. Reference interferometer (1) according to claim 1, in particular a reference interferometer with Michelson structure, wherein the at least one prism (16') is designed in such a way that a light beam (5) running essentially on the central z-axis or parallel to the central z-axis towards the beam splitter can be refracted and guided obliquely onto a first side surface of the beam splitter (3), wherein the central z-axis is the surface normal to the mirror surface (21') of a first mirror element (12') at the end face of the first interferometer arm (2'); a straight three-sided prism is particularly preferred, which can direct the light beam onto a first side surface of the beam splitter, in particular an upper side (61) of the beam splitter (3).

3. Reference interferometer (1) according to claim 1, in particular a reference interferometer with Michelson structure, wherein the at least one prism (16'') is designed in such a way that a light beam (5') running away from the beam splitter obliquely to the central x-axis can be refracted and guided substantially to a course on the central x-axis or parallel to the central x-axis, wherein the central x-axis is the surface normal to the mirror surface (21") of a second mirror element (12'') at the end face of the second interferometer arm (2''); particularly preferred is a straight three-sided prism which can refract the light beam entering from a second side surface of the beam splitter, in particular from a lower side (62).

4. Reference interferometer (1) according to any one of claims 1 to 3, **characterized in that** at least an upper side (61) and/or a lower side (62), of the beam splitter (3) is/are provided, in particular partially, with a coating,
wherein by a upper side is meant: a first side surface in a first interferometer arm and a first side surface in a second interferometer arm lying on a common plane parallel to the plane spanned by the central z-axis and the central x-axis; and
wherein a lower side means: a second side surface in the first interferometer arm and a second side surface in the second interferometer arm lying on a common plane which is parallel to the plane spanned by the central z-axis and the central x-axis, and which plane is opposite to the upper side.

5. Reference interferometer (1) according to any one of claims 1 to 4, **characterized in that** the refractive index and the thickness of the coating are selected such that, in the case of a light beam (5) of the laser light source (4) reflected by means of total internal reflection, a phase shift of π/2 ± π/10, preferably of π/2 ± π/20, between sand p-polarized totally reflected beams is achievable.

6. Reference interferometer (1) according to one of claims 1 to 5, **characterized in that** the beam splitter (3) is designed as a parallelepiped, in particular as a straight quadrilateral prism, preferably as a cuboid.

7. Reference interferometer (1) according to any one of claims 1 to 6, **characterized in that** two photoelectric detectors (7', 7'') are provided for detecting two partial beams split by a polarization beam splitter (13).

8. Reference interferometer (1) according to any one of claims 1 to 7, **characterized in that** the laser light source (4) is a diode laser, in particular a distributed feedback laser, a distributed Bragg reflector laser or a vertical cavity surface-emitting laser.

9. Use of a reference interferometer (1) according to any one of claims 1 to 8 for checking an optical path length change in interferometer arms (2).

10. Interferometer (8) with a reference interferometer (1) according to one of claims 2 to 8 for checking an optical path length change in interferometer arms (2), in particular comprising a second light source (9) for a usable beam (10) and a plurality of optical elements, wherein, during intended operation, the usable beam (10) of the light source (9) and the light beam (5) of the laser light source (4) can be guided through the same beam splitter (3), and wherein the light beam (5) of the laser light source (4) represents a reference beam,
wherein the at least one prism (16') located upstream of the beam splitter (3) in the beam path is designed in such a way that a reference beam (5) running towards the beam splitter (3) essentially parallel to the central z-axis can be deflected, and/or
wherein the at least one prism (16'') located downstream of the beam splitter (3) in the beam path is designed such that the reference beam (5') can be refracted so that the reference beam (5') runs away from the interferometer substantially parallel to the central x-axis.

11. Interferometer according to claim 10, **characterized in that** the interferometer (8) is designed as a two-beam interferometer .

12. Interferometer according to any one of claims 10 or 11, **characterized in that** the reference interferometer (1) is designed for quadrature detection.

13. Interferometer according to any one of claims 10 to 12, **characterized in that** the entry point of the reference beam into the prism upstream of the beam splitter and/or the entry point of the usable beam into the beam splitter are provided with antireflection coatings; preferably, the antireflection coating at the entry point of the reference beam into the prism upstream of the beam splitter is matched to the wavelength of the reference beam, and the antireflection coating at the entry point of the usable beam into the beam splitter is matched to the wavelength range of the usable beam.

14. Spectrometer, in particular near-infrared spectrometer, comprising an interferometer (8) according to any one of claims 10 to 13.

15. Method for determining an optical path length change, in particular a relative optical path length change in interferometer arms (2), wherein a light beam (5) is irradiated from a laser light source (4) as a reference beam onto a beam splitter (3), **characterized in that** the reference beam is guided by means of total internal reflection over a first side surface, in particular an upper side (61), of the beam splitter (3), and a second side surface, in particular a lower side (62), of the beam splitter (3), the light beam being guided over at least one first prism (16') before entering the beam splitter and/or over at least one second prism (16'') after exiting the beam splitter.

16. The method according to claim 15, wherein the reference light beam (5)
- propagates along the central z-axis or parallel to the central z-axis in a first section of the beam path, in particular before entering the first prism (16'), wherein the central z-axis is the surface normal to the mirror surface (21') of a first mirror element (12') in a first interferometer arm (2');
- propagates in a central section of the beam path obliquely to the central z-axis; and/or
- in a third section of the beam path, in particular after the exit from the second prism (16''), propagates on the central x-axis or parallel to the central x-axis, wherein the central x-axis is the surface normal to the mirror surface (21'') of a second mirror element (12'') in a second interferometer arm (2").

17. Method according to claim 15 or 16, **characterized in that** a polarization of the reference beam (5) is changed.

18. Method according to one of the claims 15 to 17, **characterized in that** a usable beam (10) is directed parallel to the reference beam (5) onto the same beam splitter (3) and is deflected via the mirror elements (12', 12''), and the usable beam (10') emerges from the beam splitter parallel to the reference beam (5').

19. Method according to any one of claims 15 to 18, **characterized in that** the reference light beam (5) and/or the usable beam (10) are detected by at least one detector (7', 7'').

## Revendications

1. Interféromètre de référence (1) pour déterminer une variation de longueur de trajet optique, en particulier une variation de longueur de trajet optique relative dans des bras d'interféromètre (2), comprenant un séparateur de faisceau (3) qui présente une couche séparatrice de faisceau (19), la couche séparatrice de faisceau (19) pouvant être traversée par un faisceau lumineux dans un premier bras d'interféromètre (2') et le faisceau lumineux pouvant être réfléchi sur la couche séparatrice de faisceau (19) dans un deuxième bras d'interféromètre (2"), comprenant en outre des éléments de miroir (12',12''), au moins un détecteur (7', 7'') et une source de lumière laser (4), **caractérisé en ce que** le séparateur de faisceau (3) est conçu de telle sorte qu'un faisceau lumineux (5) de la source de lumière laser (4) peut être guidé par réflexion interne totale sur une première surface latérale et une deuxième surface latérale du séparateur de faisceau (3), au moins la première surface latérale et/ou la deuxième surface latérale du séparateur de faisceau (3) étant pourvue(s), en particulier partiellement, d'un revêtement ;
et dans lequel l'interféromètre de référence comprend au moins un prisme (16', 16''), dans lequel
- le prisme (16') est placé en amont du séparateur de faisceau (3) dans le trajet du faisceau, de sorte qu'un faisceau lumineux (5) entrant dans le séparateur de faisceau (3) peut être dévié ; et/ou
- le prisme (16'') est placé en aval du séparateur de faisceau (3) dans le trajet du faisceau, de sorte qu'un faisceau lumineux (5') sortant du séparateur de faisceau (3) peut être dévié.

2. Interféromètre de référence (1) selon la revendication 1, en particulier un interféromètre de référence avec une structure de Michelson, dans lequel le au moins un prisme (16') est conçu de telle sorte qu'un faisceau lumineux (5) arrivant sur le séparateur de faisceau essentiellement sur l'axe central z ou parallèlement à l'axe central z peut être réfracté et guidé obliquement sur une première surface latérale du séparateur de faisceau (3), l'axe z central étant la normale à la surface de miroir (21') d'un premier élément de miroir (12') sur la face frontale du premier bras d'interféromètre (2') ; un prisme droit à trois côtés est particulièrement préféré, lequel peut diriger le faisceau lumineux sur une première surface latérale du séparateur de faisceau, en particulier une surface supérieure (61) du séparateur de faisceau (3).

3. Interféromètre de référence (1) selon la revendication 1, en particulier un interféromètre de référence avec une structure de Michelson, dans lequel le au moins un prisme (16") est conçu de telle sorte qu'un faisceau lumineux (5') s'éloignant du séparateur de faisceau en oblique par rapport à l'axe x central peut être réfracté et guidé essentiellement sur un tracé sur l'axe x central ou parallèlement à l'axe x central, l'axe x central étant la normale à la surface de miroir (21'') d'un deuxième élément de miroir (12'') sur le côté frontal du deuxième bras d'interféromètre (2'') ; un prisme droit à trois côtés est particulièrement préféré, lequel peut réfracter le faisceau lumineux entrant depuis une deuxième surface latérale du séparateur de faisceau, en particulier depuis une face inférieure (62).

4. Interféromètre de référence (1) selon l'une des revendications 1 à 3, **caractérisé en ce qu'**au moins une face supérieure (61) et/ou une face inférieure (62) du séparateur de faisceau (3) est/sont munie(s), en particulier partiellement, d'un revêtement,
où l'on entend par face supérieure : une première face latérale dans un premier bras d'interféromètre et une première face latérale dans un deuxième bras d'interféromètre, qui se trouvent sur un plan commun qui est parallèle au plan défini par l'axe central z et l'axe central x ; et
où l'on entend par face inférieure : une deuxième surface latérale dans le premier bras d'interféromètre et une deuxième surface latérale dans le deuxième bras d'interféromètre qui se trouvent sur un plan commun qui est parallèle au plan qui est tendu par l'axe central z et l'axe central x, et lequel plan est opposé à la face supérieure.

5. Interféromètre de référence (1) selon l'une des revendications 1 à 4, **caractérisé en ce que** l'indice de réfraction et l'épaisseur du revêtement sont choisis de telle sorte que, pour un faisceau lumineux (5) de la source de lumière laser (4) réfléchi au moyen d'une réflexion interne totale, un déphasage de π/2 ± π/10, de préférence de π/2 ± π/20, peut être obtenu entre les faisceaux à réflexion totale polarisés s et p.

6. Interféromètre de référence (1) selon l'une des revendications 1 à 5, **caractérisé en ce que** le séparateur de faisceau (3) est conçu comme un parallélépipède, en particulier comme un prisme carré droit, de préférence comme un parallélépipède rectangle.

7. Interféromètre de référence (1) selon l'une des revendications 1 à 6, **caractérisé en ce que** deux détecteurs photoélectriques (7', 7'') sont prévus pour la détection de deux faisceaux partiels divisés par un séparateur de faisceau polarisant (13).

8. Interféromètre de référence (1) selon l'une des revendications 1 à 7, **caractérisé en ce que** la source de lumière laser (4) est un laser à diode, en particulier un laser à retour distribué, un laser à réflecteur de Bragg distribué ou un laser à émission de surface à cavité verticale.

9. Utilisation d'un interféromètre de référence (1) selon l'une des revendications 1 à 8 pour vérifier une variation de longueur de trajet optique dans des bras d'interféromètre (2).

10. Interféromètre (8) avec un interféromètre de référence (1) selon l'une des revendications 2 à 8 pour le contrôle d'une variation de longueur de trajet optique dans des bras d'interféromètre (2), comprenant en particulier une deuxième source de lumière (9) pour un faisceau utile (10) et plusieurs éléments optiques, le faisceau utile (10) de la source de lumière (9) et le faisceau lumineux (5) de la source de lumière laser (4) pouvant être guidés à travers le même séparateur de faisceau (3) lors du fonctionnement conforme aux prescriptions, et le faisceau lumineux (5) de la source de lumière laser (4) représentant un faisceau de référence,
l'au moins un prisme (16') placé en amont du séparateur de faisceau (3) dans le trajet du faisceau étant conçu de telle sorte qu'un faisceau de référence (5) arrivant sur le séparateur de faisceau (3) sensiblement parallèlement à l'axe central z peut être dévié, et/ou
l'au moins un prisme (16'') placé en aval du séparateur de faisceau (3) dans le trajet du faisceau étant conçu de telle sorte que le faisceau de référence (5') peut être réfracté, de sorte que le faisceau de référence (5') s'éloigne de l'interféromètre essentiellement parallèlement à l'axe x central.

11. Interféromètre selon la revendication 10, **caractérisé en ce que** l'interféromètre (8) est conçu comme un interféromètre à deux faisceaux.

12. Interféromètre selon l'une des revendications 10 ou 11, **caractérisé en ce que** l'interféromètre de référence (1) est conçu pour la détection en quadrature.

13. Interféromètre selon l'une des revendications 10 à 12, **caractérisé en ce que** le point d'entrée du faisceau de référence dans le prisme placé en amont du séparateur de faisceau et/ou le point d'entrée du faisceau utile dans le séparateur de faisceau sont pourvus de revêtements antireflet ; de préférence, le revêtement antireflet au point d'entrée du faisceau de référence dans le prisme placé en amont du séparateur de faisceau est adapté à la longueur d'onde du faisceau de référence et le revêtement antireflet au point d'entrée du faisceau utile dans le séparateur de faisceau est adapté à la plage de longueurs d'onde du faisceau utile.

14. Spectromètre, notamment spectromètre proche infrarouge, comportant un interféromètre (8) selon l'une des revendications 10 à 13.

15. Procédé pour déterminer une variation de longueur de trajet optique, en particulier une variation de longueur de trajet optique relative dans des bras d'interféromètre (2), un faisceau lumineux (5) étant émis par une source de lumière laser (4) en tant que faisceau de référence sur un séparateur de faisceau (3), **caractérisé en ce que** le faisceau de référence est émis au moyen d'une réflexion interne totale sur une première surface latérale, en particulier une face supérieure (61) du séparateur de faisceau (3), et une deuxième face latérale, en particulier une face inférieure (62) du séparateur de faisceau (3), le faisceau lumineux étant guidé sur au moins un premier prisme (16') avant l'entrée dans le séparateur de faisceau et/ou sur au moins un deuxième prisme (16'') après la sortie du séparateur de faisceau.

16. Procédé selon la revendication 15, dans lequel le faisceau de lumière de référence (5) se déplace vers le haut ou vers le bas.
- se propage sur l'axe central z ou parallèlement à l'axe central z dans une première section du trajet optique, en particulier avant l'entrée dans le premier prisme (16'), l'axe central z étant la normale à la surface de miroir (21') d'un premier élément de miroir (12') dans un premier bras d'interféromètre (2') ;
- se propage dans une partie centrale du trajet optique, obliquement par rapport à l'axe central z ; et/ou
- se propage sur l'axe central x ou parallèlement à l'axe central x dans une troisième section du trajet du faisceau, en particulier après la sortie du deuxième prisme (16''), l'axe central x étant la normale à la surface de miroir (21") d'un deuxième élément de miroir (12") dans un deuxième bras d'interféromètre (2'').

17. Procédé selon la revendication 15 ou 16, **caractérisé en ce qu'**une polarisation du faisceau de référence (5) est modifiée.

18. Procédé selon l'une des revendications 15 à 17, **caractérisé en ce que**, parallèlement au faisceau de référence (5), un faisceau utile (10) est dirigé sur le même séparateur de faisceau (3) et est guidé par les éléments de miroir (12', 12'') et le faisceau utile (10') sort du séparateur de faisceau parallèlement au faisceau de référence (5').

19. Procédé selon l'une des revendications 15 à 18, **caractérisé en ce que** le faisceau lumineux de référence (5) et/ou le faisceau utile (10) sont détectés par au moins un détecteur (7', 7'').
